(19) Europäisches Patentamt / European Patent Office / Office européen des brevets

(11) **EP 4 742 707 A1**

(12) **EUROPEAN PATENT APPLICATION**
published in accordance with Art. 153(4) EPC

(43) Date of publication:
**13.05.2026   Bulletin 2026/20**

(21) Application number: 24836285.7

(22) Date of filing: 02.07.2024

(51) International Patent Classification (IPC):
*H04W 4/40* (2018.01)       *H04W 4/12* (2009.01)
*H04W 24/08* (2009.01)       *H04W 28/02* (2009.01)
*H04W 92/18* (2009.01)       *H04W 4/90* (2018.01)
*H04W 56/00* (2009.01)       *H04W 92/10* (2009.01)

(52) Cooperative Patent Classification (CPC):
H04W 4/12; H04W 4/40; H04W 4/90; H04W 24/08;
H04W 28/02; H04W 56/00; H04W 92/10;
H04W 92/18

(86) International application number:
**PCT/KR2024/009262**

(87) International publication number:
**WO 2025/009837 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  04.07.2023  KR 20230086561
11.06.2024  KR 20240075618

(71) Applicant: **LG Electronics Inc.**
**Yeongdeungpo-gu**
**Seoul 07336 (KR)**

(72) Inventors:
• **HWANG, Jaeho**
**Seoul 06772 (KR)**
• **SEO, Hanbyul**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRANSMITTING MESSAGE BY TERMINAL IN WIRELESS COMMUNICATION SYSTEM**

(57)   Disclosed are a method and an apparatus for transmitting a message by a first terminal in a wireless communication system according to various embodiments. Disclosed are a method and an apparatus therefor, the method comprising the steps of: periodically transmitting a first message including first mobility information to a second terminal via a first link for direct device-to-device communication; and periodically transmitting a second message including second mobility information to the second terminal via a second link for communication with a network.

FIG. 17

# EP 4 742 707 A1

**Description**

## TECHNICAL FIELD

The present disclosure relates to a method for a User Equipment (UE) to transmit a Vehicle-to-Everything (V2X) message and a Vehicle-to-Network (V2N) message in a wireless communication system, and an apparatus therefor.

## BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

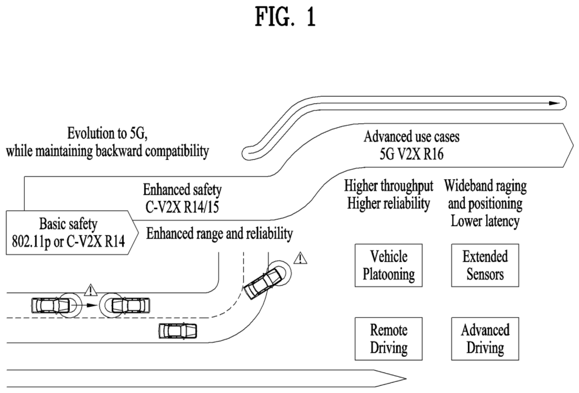

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

## DISCLOSURE

### TECHNICAL PROBLEM

The object of the present disclosure is to provide a method for a User Equipment (UE) to efficiently transmit a message in a wireless communication system, and an apparatus therefor.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

In an aspect of the present disclosure, provided herein is a method of transmitting a message by a first User Equipment (UE) in a wireless communication system. The method includes: periodically transmitting a first message including first mobility information to a second UE through a first link for direct communication between UEs; and periodically transmitting a second message including second mobility information to the second UE through a second link for communication with a network. The second message is generated and transmitted after an offset time from a transmission time of the first message. A transmission period of the second message is changed based on a channel quality of the first link.

Alternatively, the transmission period of the second message is decreased based on the channel quality of the first link being less than a first threshold quality.

Alternatively, the transmission period of the second message is decreased based on an increase in a transmission period of the first message due to the channel quality of the first link.

Alternatively, the first UE changes the transmission period of the second message in further consideration of at least one of mobility change and risk detection.

Alternatively, the offset time is determined based on a difference between reception delay of the first message and reception delay of the second message and based on the transmission period of the second message.

Alternatively, the offset time is set to a value obtained by dividing the transmission period of the second message by two.

Alternatively, the channel quality of the first link is a Channel Busy Ratio (CBR).

Alternatively, the first link is a link based on a PC5 interface, and the second link is a link based on a Uu interface.

In another aspect of the present disclosure, provided herein is a computer-readable recording medium having recorded thereon a program for executing the above-described message transmission method.

In another aspect of the present disclosure, provided herein is a first UE configured to perform the above-described message transmission method.

In another aspect of the present disclosure, provided herein is a processing device configured to control a first UE that performs the above-described message transmission method.

In another aspect of the present disclosure, provided herein is a method of receiving a message by a second UE in a wireless communication system. The method includes: periodically receiving a first message including first mobility information from a first UE through a first link for direct communication between UEs; and periodically receiving a second message including second mobility information from the first UE through a second link for communication with a network. The second message is a message generated after an offset time from a reception time of the first message, and a reception period of the second message is changed based on a channel quality of the first link.

In another aspect of the present disclosure, provided herein is a computer-readable recording medium having recorded thereon a program for executing the above-described message reception method.

In another aspect of the present disclosure, provided herein is a second UE configured to perform the above-described message reception method.

In a further aspect of the present disclosure, provided herein is a processing device configured to control a second UE that performs the above-described message reception method.

### ADVANTAGEOUS EFFECTS

According to an embodiment, a User Equipment (UE) may efficiently transmit and receive a message in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

## BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.

FIG. 1 is a diagram for explaining by comparing V2X communication based on RAT before NR and V2X communication based on NR.

FIG. 2 illustrates the structure of an LTE system to which embodiment(s) are applicable.

FIG. 3 illustrates the structure of an NR system to which embodiment(s) are applicable.

FIG. 4 illustrates the structure of an NR radio frame to which embodiment(s) are applicable.

FIG. 5 illustrates the slot structure of an NR frame to which embodiment(s) are applicable.

FIG. 6 shows a communication structure providable in a 6G system, based on an embodiment of the present disclosure.

FIG. 7 shows an electromagnetic spectrum, based on an embodiment of the present disclosure.

FIG. 8 shows an example of an NTN typical scenario based on a transparent payload, based on an embodiment of the present disclosure.

FIG. 9 shows an example of an NTN typical scenario based on a regenerative payload, based on an embodiment of the present disclosure.

FIG. 10 shows an example of a sensing operation, based on an embodiment of the present disclosure.

FIG. 11 illustrates a radio protocol architecture for SL communication.

FIG. 12 illustrates UEs performing V2X or SL communication.

FIG. 13 illustrates resource units for V2X or SL communication.

FIG. 14 shows an example of a BWP, based on an embodiment of the present disclosure.

FIG. 15 shows a procedure of performing V2X or SL communication by a UE based on a resource allocation mode, based on an embodiment of the present disclosure.

FIGS. 16 and 17 are diagrams for explaining a message operation scheme of a hybrid UE.

FIG. 18 is a block diagram briefly illustrating a configuration of a hybrid UE.

FIGS. 19 to 22 are diagrams for explaining a method for transmitting and receiving a message between hybrid UEs.

FIG. 23 is a diagram for explaining a method in which a first UE transmits a V2X message and a V2N message.

FIG. 24 is a diagram for explaining a method in which a second UE receives a V2X message and a V2N message.

FIG. 25 illustrates a communication system applied to the present disclosure.

FIG. 26 illustrates wireless devices applicable to the present disclosure.

FIG. 27 illustrates another example of a wireless device to which the present disclosure is applied.

FIG. 28 illustrates a vehicle or an autonomous driving vehicle applied to the present disclosure.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion.

A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

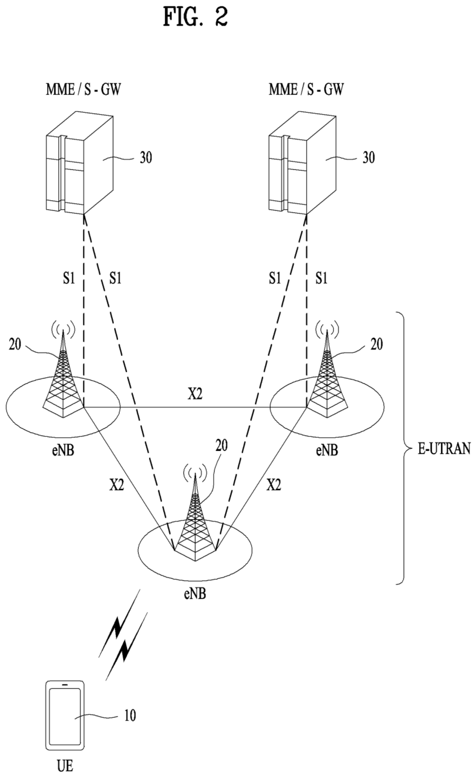

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node BS (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

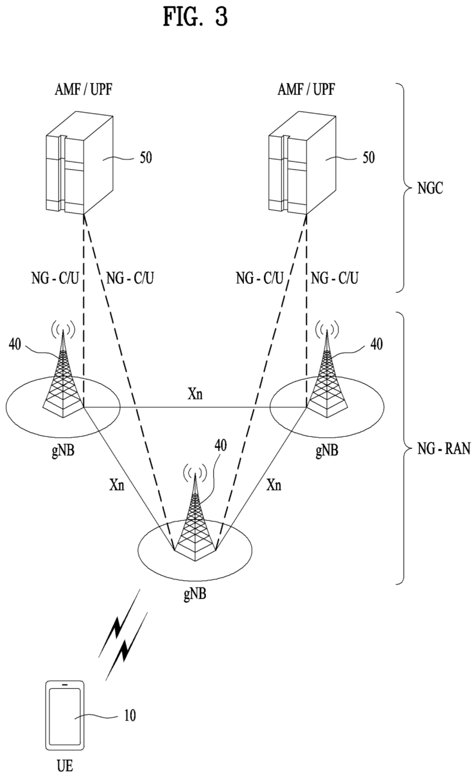

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

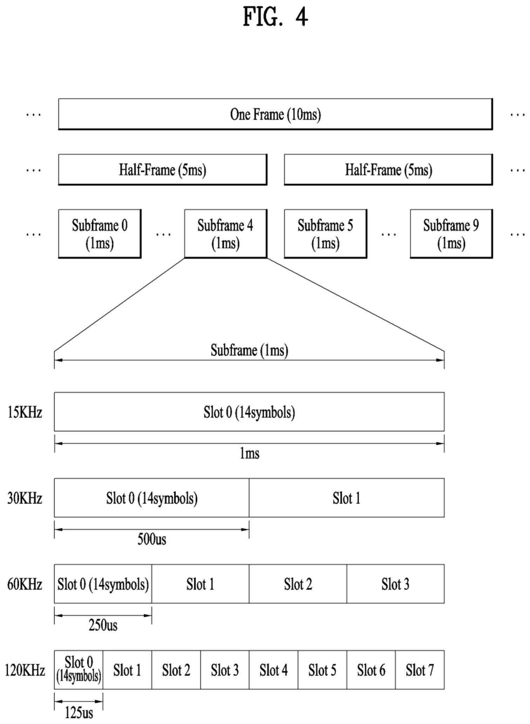

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot $N^{slot}_{symb}$, the number of slots per frame $N^{frame,u}_{slot}$, and the number of slots per subframe $N^{subframe,u}_{slot}$ according to an SCS configuration $\mu$ in the NCP case.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS (15*2^u) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

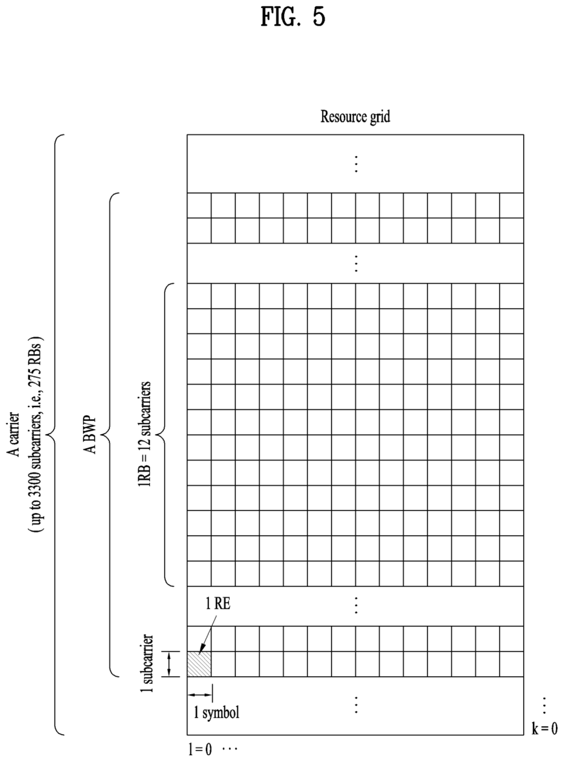

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

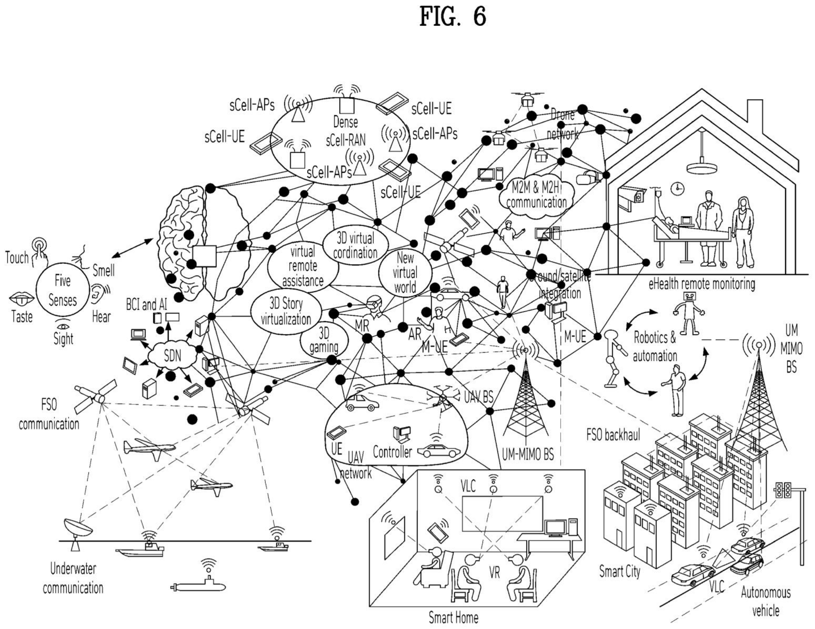

FIG. 6 shows a communication structure providable in a 6G system, based on an embodiment of the present disclosure. The embodiment of FIG. 6 may be combined with various embodiments of the present disclosure.

In 6G, new network characteristics may be as follows.

- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul
- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.

- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.

Terahertz (THz) communication: A data rate may increase by increasing bandwidth. This may be performed by using sub-TH communication with wide bandwidth and applying advanced massive MIMO technology. THz waves, which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity to RF.

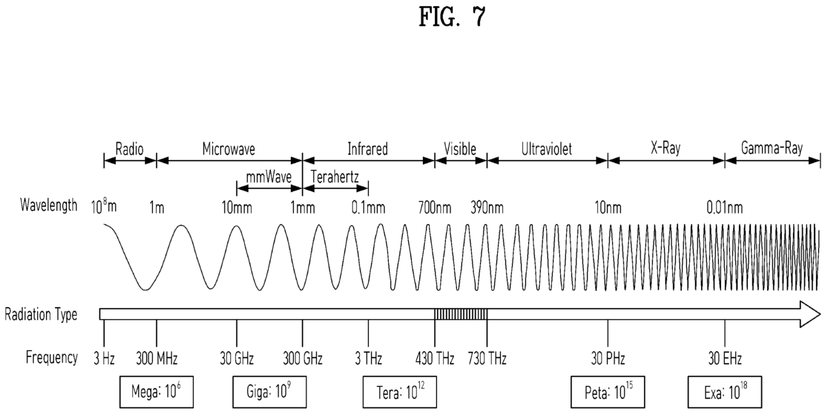

FIG. 7 shows an electromagnetic spectrum, based on an embodiment of the present disclosure. The embodiment of FIG. 7 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

- Massive MIMO technology (large-scale MIMO)

- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.

Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.

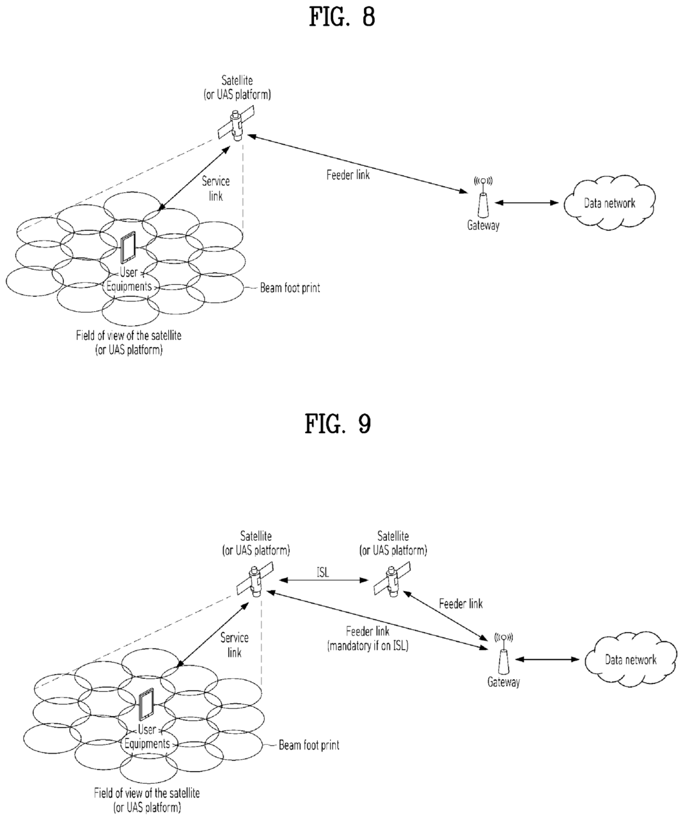

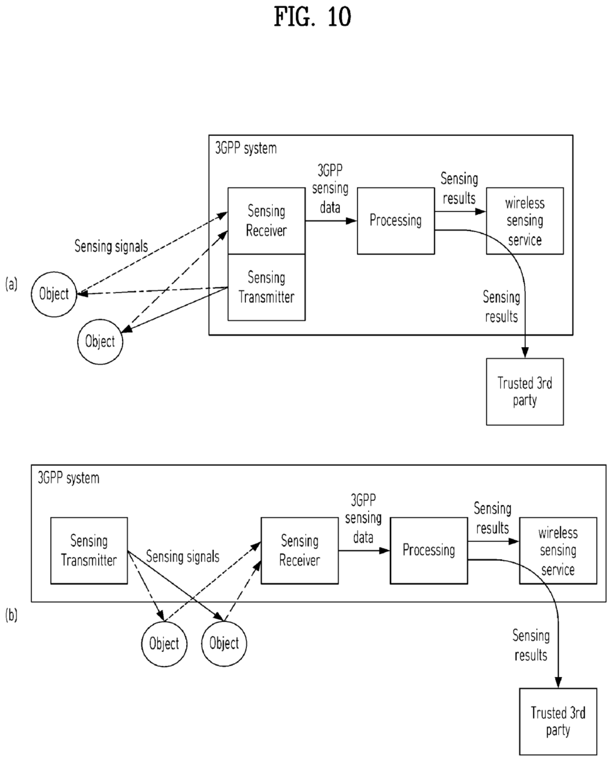

- Non-terrestrial networks (NTN): An NTN may refer to a network or a network segment that utilizes radio frequency (RF) resources aboard a satellite (or an unmanned aerial system (UAS) platform). FIG. 8 shows an example of an NTN typical scenario based on a transparent payload, based on an embodiment of the present disclosure. FIG. 9 shows an example of an NTN typical scenario based on a regenerative payload, based on an embodiment of the present disclosure. The embodiment of FIG. 8 or FIG. 9 may be combined with various embodiments of the present disclosure. Referring to FIG. 8, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 9, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGS. 8 and 9 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.
- Integrated sensing and communication (ISAC): Wireless sensing is a technology enabler to acquire information about characteristics of the environment and/or objects within the environment that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 10 shows an example of a sensing operation, based on an embodiment of the present disclosure. The embodiment of FIG. 10 may be combined with various embodiments of the present disclosure. Specifically, (a) of FIG. 10 shows an example of sensing (e.g., monostatic sensing) with co-located sensing receiver and sensing transmitter, and (b) of FIG. 10 shows an example of sensing (e.g., bistatic sensing) with separated sensing receiver and sensing transmitter.

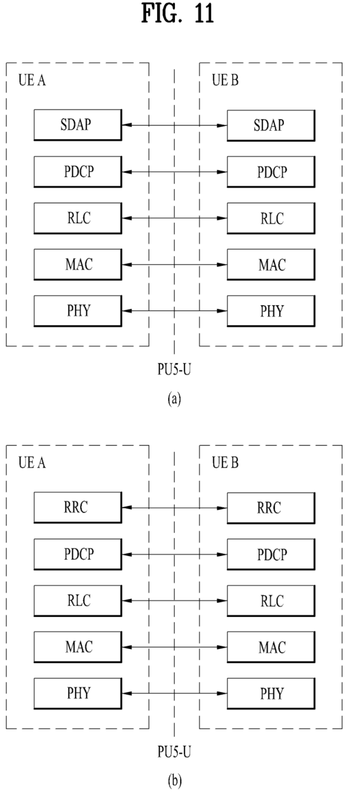

FIG. 11 illustrates a radio protocol architecture for SL communication. Specifically, FIG. 11-(a) shows a user plane protocol stack of NR, and FIG. 11-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

**In** the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

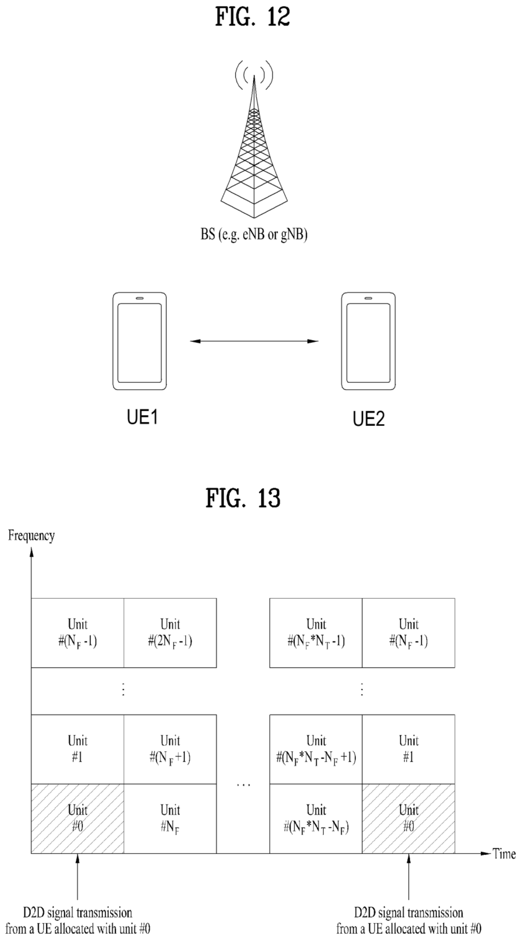

FIG. 12 illustrates UEs performing V2X or SL communication.

Referring to FIG. 12, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 13 illustrates resource units for V2X or SL communication.

Referring to FIG. 13, the frequency resources of a resource pool may be divided into NF sets, and the time resources of the resource pool may be divided into NT sets. Accordingly, a total of NF * NT resource units may be defined in the resource pool. FIG. 13 shows an exemplary case where the resource pool is repeated with a periodicity of NT subframes.

As shown in FIG. 13, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

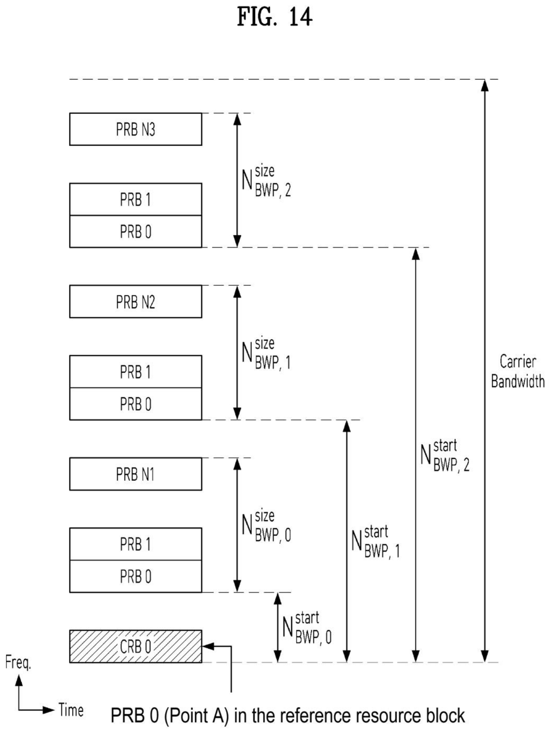

FIG. 14 shows an example of a BWP, based on an embodiment of the present disclosure. The embodiment of FIG. 14 may be combined with various embodiments of the present disclosure. It is assumed in the embodiment of FIG. 14 that the number of BWPs is 3.

Referring to FIG. 14, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

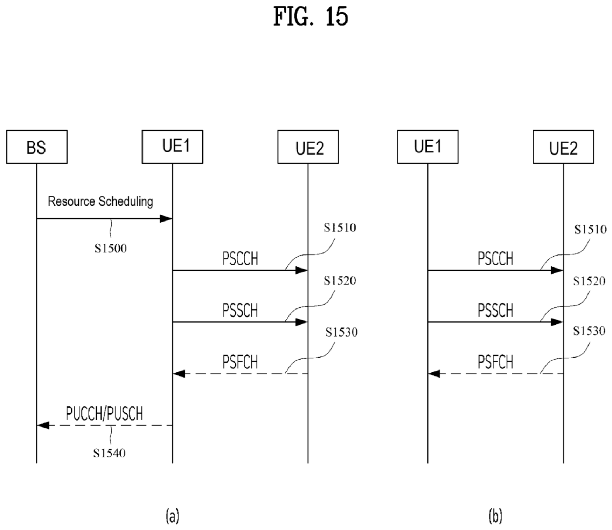

FIG. 15 shows a procedure of performing V2X or SL communication by a UE based on a resource allocation mode, based on an embodiment of the present disclosure. The embodiment of FIG. 15 may be combined with various embodiments of the present disclosure.

Referring to (a) of FIG. 15, in a resource allocation mode 1, a base station may schedule SL resource(s) to be used by a UE for SL transmission. For example, in step S1500, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE. For example, HARQ feedback information (e.g., NACK information or ACK information) may be received from the second UE through the PSFCH. In step S1540, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 15, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S1510, a first UE which has selected resource(s) from a resource pool by itself may transmit a PSCCH (e.g., sidelink control information (SCI) or 1st-stage SCI) to a second UE by using the resource(s). In step S1520, the first UE may transmit a PSSCH (e.g., 2nd-stage SCI, MAC PDU, data, etc.) related to the PSCCH to the second UE. In step S1530, the first UE may receive a PSFCH related to the PSCCH/PSSCH from the second UE.

Referring to (a) or (b) of FIG. 15, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 15, in step S1530, the first UE may receive the PSFCH. For example, the first UE and the second UE may determine a PSFCH resource, and the second UE may transmit HARQ feedback to the first UE using the PSFCH resource.

Referring to (a) of FIG. 15, in step S1540, the first UE may transmit SL HARQ feedback to the base station through the PUCCH and/or the PUSCH.

The sidelink described above may be defined as communication between UEs or direct communication between UEs. In this case, the PSCCH may be defined as a physical control channel for communication between UEs, the PSSCH may be defined as a physical data channel or physical shared channel for communication between UEs, and the PSFCH may be defined as a physical feedback transmission channel between UEs.

## Method for configuring sequential transmission for hybrid V2X UE

For Vehicle-to-Everything (V2X), V2X technology (for example, PC5 and Dedicated Short Range Communications (DSRC)) based on direct communication (short-range communication) and Vehicle-to-Network (V2N) technology that utilizes a Uu interface of a network (long-range communication or cellular communication) are being developed in a mixed manner. In particular, technology development is being discussed such that a UE is capable of supporting both a V2X service based on direct communication and a V2N service based on a Uu interface. However, at the current stage, a UE supports the two services without any interworking between the two services. That is, a UE supporting the two services transmits a V2X message and a V2N message according to independent message-operation methods of the services. In this case, a receiving UE may be unable to efficiently utilize messages for the two services, and consistency of service provision may be degraded.

Hereinafter, a method for interworking message operation schemes between V2X technology in which direct communication between UEs is performed through a 5.9 GHz band and V2N technology that utilizes an existing network is described in detail in view of such a problem. In particular, a method for significantly improving message operation efficiency at a hybrid UE that supports both technologies through interworking between the respective message operation schemes is described in detail.

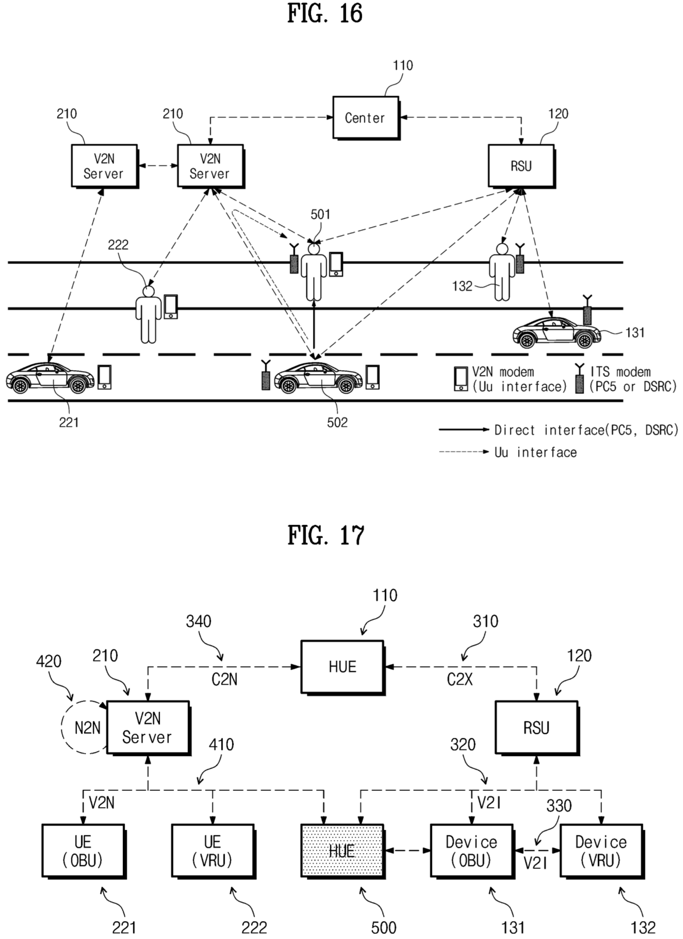

FIGS. 16 and 17 are diagrams for explaining a message operation scheme of a hybrid UE.

Referring to FIG. 16, a hybrid UE 502 may transmit a V2X message for providing a V2X service to a surrounding device 501 based on a direct-communication technology (PC5 and DSRC). The hybrid UE 502 may also transmit a V2N message related to the V2X service to the surrounding device 501 through a V2N server 210 based on a conventional cellular network. The hybrid UE 502 may transmit both the V2X message and the V2N message. In this case, when the surrounding device 501 is also a hybrid UE, the surrounding device 501 receives both the V2X message and the V2N message including redundant information (for example, mobility information).

Referring to FIG. 17, an On Board Unit (OBU) 131 installed in a vehicle and a Vulnerable Road User (VRU) device 132 installed in a traffic-vulnerable entity such as a pedestrian exchange V2X messages through direct communication (DSRC or PC5) using a conventional 5.9 GHz band. An RSU 120 located around a road may transmit Signal Phase and Timing (SPaT) and MAP signals through short-range communication 320 or collect information of UEs such as Probe Vehicle Data (PVD). In addition, an OBU 221 and a VRU 222 that do not support direct communication may exchange messages through a V2N server 210 through a Uu interface 410. The Uu interface 410 may be a cellular network (or mobile communication network) with a conventional BS.

A hybrid UE (HUE) 500 is not only capable of performing direct communication (or short-range communication) between UEs, but may also exchange a V2N message through the V2N server 210 through a Uu interface (for example, a cellular network or long-range communication).

Hereinafter, a configuration of a hybrid UE that supports two communication technologies is described in detail.

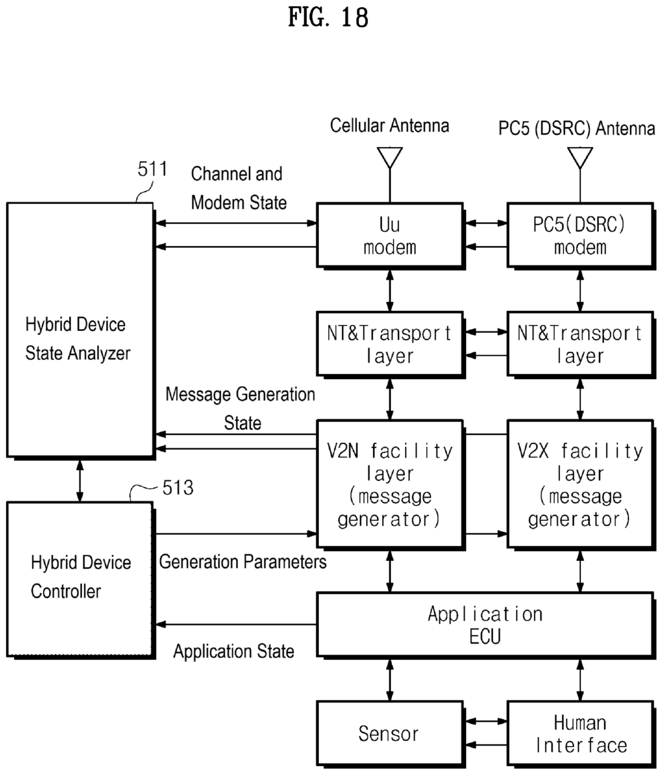

FIG. 18 is a block diagram briefly illustrating a configuration of a hybrid UE.

According to the proposed method, the channel states of short-range communication and long-range communication are measured, and based on the measured channel states, a V2X modem (for example, a modem for direct communication between UEs or a modem for PC5) and a service at an application layer are controlled, thereby interworking the short-range communication and the long-range communication

Referring to FIG. 18, the hybrid UE may include a cellular antenna capable of long-range communication and a PC5 (or DSRC) antenna capable of direct communication through a 5.9 GHz band. A signal received through the cellular antenna is processed through a Uu modem 521, and a signal received through the PC5 (or DSRC) antenna may be processed through a PC5 (or DSRC) modem 531. In addition, the hybrid UE may process Network & Transport layer operations and Facility layer operations in a V2N stack 523 connected to the Uu modem 521 and a V2X stack 533 connected to the PC5 (or DSRC) modem 531.

In addition, the hybrid UE may further include a hybrid-sensor block and a hybrid-control block for interworking the two technologies. The hybrid-sensor block may analyze transmission states (transmission period, transmission time, transmission-channel state) at a PHY layer and a Facility layer of the short-range communication and the long-range communication, respectively. The hybrid-control block may adjust/control transmission periods of respective messages based on states of the two communication modems measured by the hybrid-sensor block.

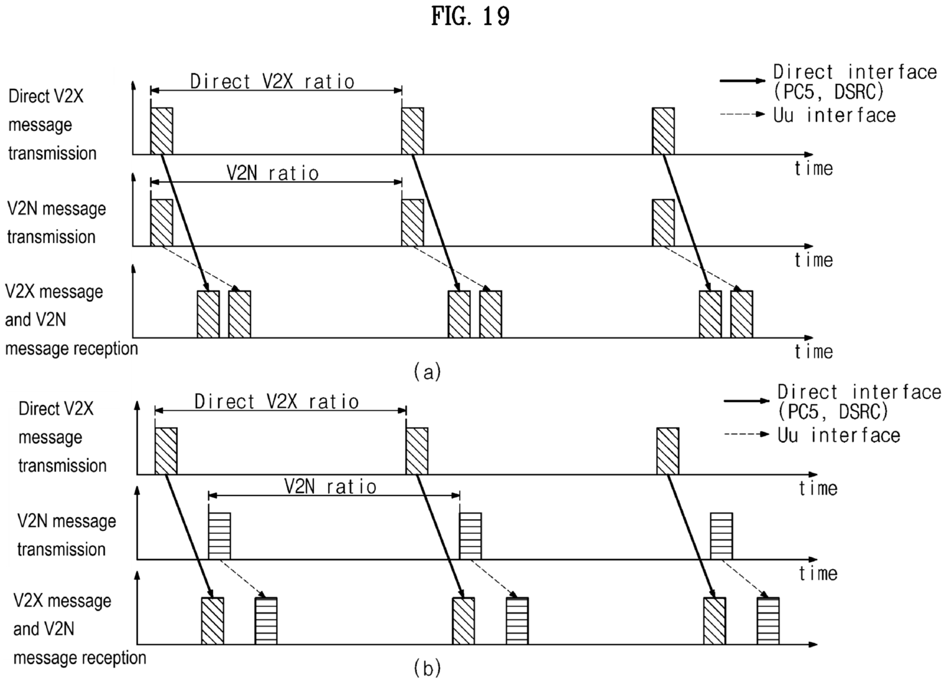

FIGS. 19 to 22 are diagrams for explaining a method for transmitting and receiving a message between hybrid UEs.

A transmitting hybrid UE (hereinafter, a transmitting UE) may periodically transmit a V2X message and a V2N message based on a long-range-communication (or Uu-interface-based) modem and a short-range-communication (or PC5-interface-based) modem, respectively. For example, the transmitting UE may periodically transmit the V2X message at a direct V2X period (direct V2X ratio), and may periodically transmit the V2N message at a V2N period (V2N ratio).

Specifically, referring to FIG. 19(a), the transmitting UE may transmit a V2X message and a V2N message without control by the hybrid-control block described above. In this case, the transmitting UE may transmit a single message generated at an Application & Facility layer through both a channel for long-range communication and a channel for short-range communication. This provides an advantage in that a common Application & Facility layer may be used for long-range communication and short-range communication. However, as illustrated in FIG. 19(a), a V2N message based on long-range communication and a V2X message based on short-range communication may experience different reception delays, and a receiving UE may therefore receive duplicate messages including identical mobility information at different times, which may be a disadvantage.

Alternatively, referring to FIG. 19(b), the transmitting UE may independently transmit a V2N message based on long-range communication and a V2X message based on short-range communication. In this case, the receiving UE may receive the V2X message and the V2N message at predetermined time intervals. However, transmission intervals (or reception intervals) between the V2X message and the V2N message may not be constant, and it may therefore be difficult to sequentially provide mobility information of the transmitting UE through the V2N message and the V2X message. Accordingly, it is necessary to associate transmission times of the V2X message or the V2N message such that the V2X message and the V2N message may be fusion-processed.

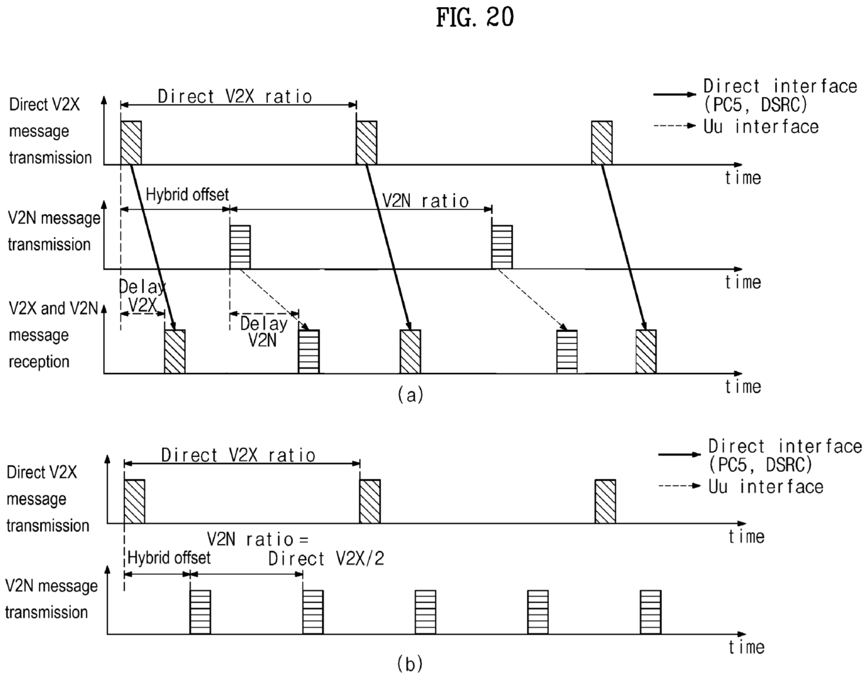

Referring to FIG. 20(a), a V2X message and a V2N message may be transmitted with a predetermined offset time interval therebetween. In this case, a transmission period of the V2X message may be identical to a transmission period of the V2N message. The transmitting UE may sequentially generate and transmit the V2X message and the V2N message such that the messages have a predetermined time interval. For example, the transmitting UE may generate or transmit the V2N message such that the V2N message has a time difference corresponding to a predetermined hybrid offset (or offset time; offset Hybrid) based on a transmission period or a generation period of the V2X message. For example, the offset time may be determined as a value obtained by dividing the transmission period of the V2N message by two, as shown in Equation 1 below. In this case, a UE having respective transmission modems receives messages at the same period as that of a conventional UE, but a hybrid UE receives messages at the same period. That is, the hybrid UE may acquire mobility information of the transmitting UE at a specific periodic interval through the V2X message and the V2N message (that is, the V2N message is generated/transmitted at a midpoint of the transmission period of the V2X message).

[Equation 1]

$$\text{offest}^{\text{Hybrid}} = \frac{\text{Ratio}^{\text{V2N}}}{2}$$

Alternatively, referring to FIG. 20(b), a transmission period of a V2N message may be shorter than a transmission period of a V2X message. In this case, the transmitting UE may set the transmission period of the V2N message to half of the transmission period of the V2X message, and may set a hybrid-offset value to a value obtained by dividing the V2N transmission period by two, as shown in Equation 1. By doing so, a receiver has an advantage of periodically receiving a most sequential state of the transmitting vehicle. In other words, the receiving UE may receive the V2X message and the V2N message in an alternating manner according to a consistent reception pattern.

In the case of short-range communication (PC5 or DSRC), a transmission period of a V2X message may be adjusted or changed according to ta communication channel state. For example, when a channel state in conventional V2X communication deteriorates below a specific threshold, the transmission period of the V2X message may be increased. In this case, due to the increased transmission period of the V2X message, the transmitting UE may be unable to appropriately transmit information on a mobility state of the transmitting UE to surrounding UEs. To address this problem, when the transmission period of the V2X message is changed or adjusted according to a change in the communication-channel state of short-range communication, the transmission period of the V2N message may also be adjusted or changed together.

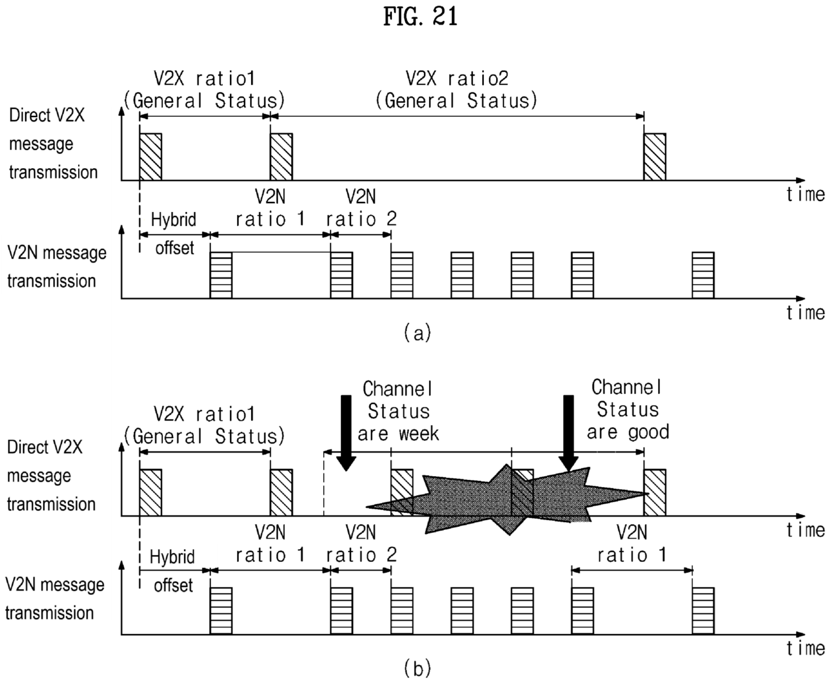

For example, referring to FIG. 21(a), a transmission period of a V2X message is increased when a Channel Busy Ratio (CBR), which is measured as a channel state of a V2X communication channel or a short-range communication channel, becomes high. In this case, the transmitting UE may decrease a transmission period of a V2N message. For example, when the CBR of the short-range communication channel for transmitting the V2X message is equal to or higher than a specific threshold, the transmitting UE may change transmission period 1 (V2X ratio 1) of the V2X message to transmission period 2 (V2X ratio 2). The transmitting UE may decrease the transmission period of the V2N message from transmission period 1 (V2N ratio 1) to transmission period 2 (V2N ratio 2) based on the increased transmission period of the V2X message.

Alternatively, when a channel state for transmitting the V2X message is determined to be busy, the transmitting UE may delay or drop transmission of the V2X message. When the transmission of the V2X message is delayed or dropped due to channel occupancy by another device, the transmitting UE may decrease the transmission period of the V2N message from transmission period 1 (V2N ratio 1) to transmission period 2 (V2N ratio 2).

Meanwhile, when the CBR becomes high, the transmitting UE may increase the transmission period of the V2X message to a period longer than a conventional V2X-message transmission period (for example, an increased transmission period of a non-hybrid UE). For example, in a conventional case, the transmission period of the V2X message may be configured to change from 0.1 seconds to 0.2 seconds when the CBR becomes higher than a predetermined threshold. In contrast, when the transmitting UE is a hybrid UE, the transmitting UE may compensate for a reduction in the number of times the V2X message is transmitted by transmitting the V2N message. Accordingly, the transmitting UE may increase the transmission period of the V2X message to 1 second, which is longer than 0.2 seconds, while decreasing the transmission period of the V2N message from 0.1 seconds to 0.05 seconds. That is, a degree of increase in the V2X-message transmission period according to the CBR may differ based on whether the transmitting UE is a hybrid UE.

Alternatively, the transmitting UE may adjust or change the transmission period of the V2N message based on a channel state for transmitting the V2X message (hereinafter, a V2X channel state). For example, the transmitting UE may adjust the transmission period of the V2N message by directly considering the V2X channel state (for example, regardless of whether the transmission period of the V2X message is changed due to deterioration of the channel state). Specifically, referring to FIG. 21(b), when the V2X channel state deteriorates and reception of the V2X message at the receiving UE is predicted or expected to fail, the transmitting UE may decrease the transmission period of the V2N message and more frequently transmit the V2N message until the reception state improves. For example, when likelihood of a V2X-message reception failure at the receiving UE becomes high due to deterioration of the V2X channel state after the transmitting UE transmits a second V2X message, the transmitting UE may adjust the transmission period of the V2N message (from ratio 1 to ratio 2) to increase the number of times the V2N message is transmitted (in this case, the transmission period of the V2X message is maintained).

For example, when the V2X channel state deteriorates below a specific level (however, not to a level that increases the transmission period of a conventional V2X message), the transmitting UE may decrease the transmission period of the V2N message in view of an increase in likelihood that the receiving UE fails to receive the V2X message due to the deterioration of the V2X channel state (while the V2X message is transmitted at the existing period).

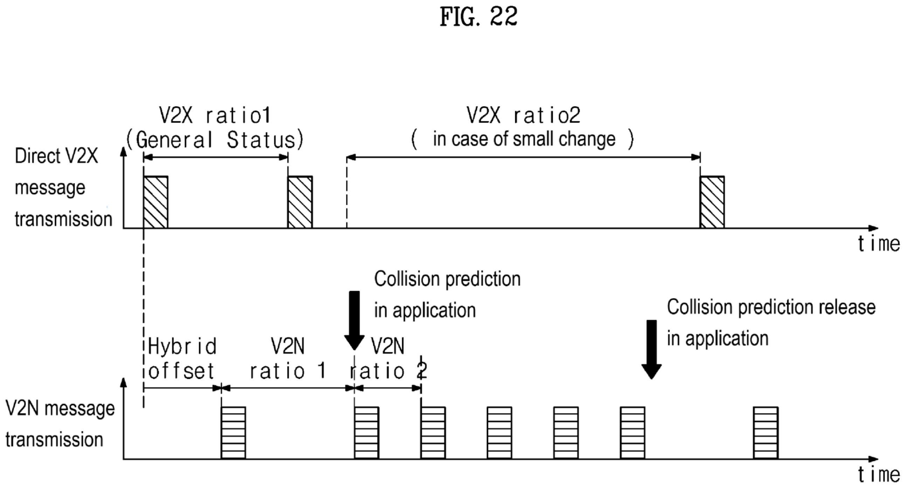

Alternatively, referring to FIG. 22, the transmitting UE may change or adjust a transmission period of a V2N message based on a generation condition of a V2X message. Specifically, a generation period of the V2X message may vary according to a state change of the transmitting UE. For example, when the state change of the transmitting UE is less than a threshold change, the transmitting UE may increase the generation period of the V2X message (for example, from 100 msec to 1000 msec). In this case, if an application of the transmitting UE predicts a collision risk involving the transmitting UE due to speeds or movement paths of surrounding UEs, the transmitting UE may decrease the transmission period of the V2N message to compensate for a reduction in the number of times the V2X message is transmitted resulting from an increase in the generation period of the V2X message.

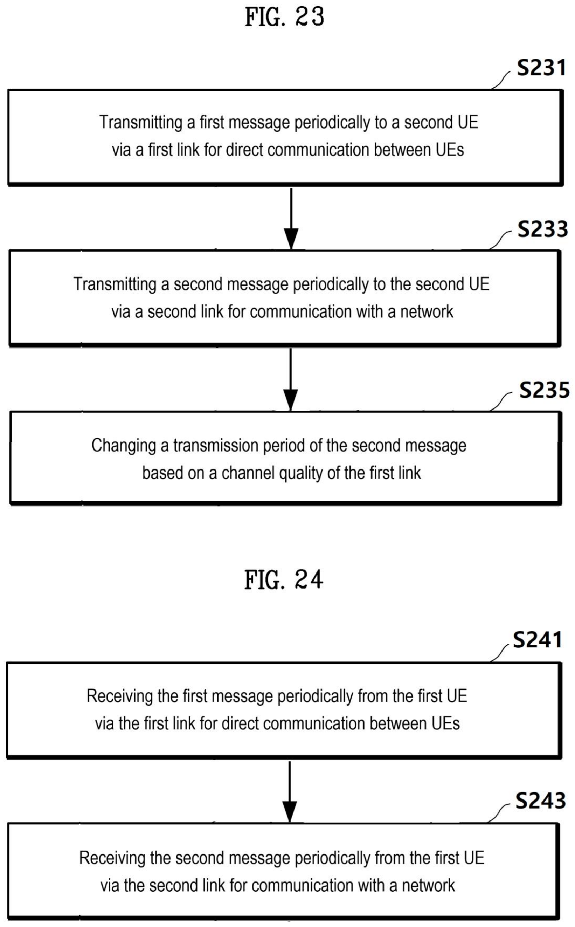

FIG. 23 is a diagram for explaining a method in which a first UE transmits a V2X message and a V2N message.

Referring to FIG. 23, the first UE may periodically transmit a first message including first mobility information to a second UE through a first link for direct communication between UEs (S231). As described above, the first link may be a link based on a PC5 interface capable of direct communication between UEs or may be a link based on DSRC. The first message may be a V2X message exchanged between UEs (or vehicles). Alternatively, the first message may be a message for a V2X service such as a Basic Safety Message (BSM), a Common Awareness Message (CAM), a Collective Perception Message (CPM), a Personal Safety Message (PSM), or a Decentralized Environment Notification Message (DENM). The first mobility information may include at least one of a movement speed, a location, an acceleration, and a movement direction of the first UE at a generation time of the first message. As described above, the first UE may be a hybrid UE capable of transmitting a V2X message through the first link and transmitting a V2N message through a second link corresponding to another communication modem or another communication system.

Next, the first UE may periodically transmit a second message including second mobility information to the second UE through the second link for communication with a network (S233). As described above, the second link may be a link based on a Uu interface. The second link may be a link based on a cellular mobile communication network connected to the network. The second message may be a V2N message that provides mobility information of the first UE to surrounding UEs or surrounding vehicles through the network. The second mobility information may include at least one of a movement speed, a location, an acceleration, and a movement direction of the first UE at a generation time of the second message. In this case, the second message may have a default period identical to that of the first message.

The first UE may sequentially generate and transmit the first message and the second message with a predetermined offset time such that the first message and the second message are sequentially received at a receiving UE. As described above, the first UE may generate and transmit the second message after the predetermined offset time from a transmission time of the first message. In this case, the second message may include mobility information of the first UE after the predetermined offset time from the transmission time of the first message. The predetermined offset time may be determined based on a transmission period of the second message. For example, the predetermined offset time may be set to a value obtained by dividing the transmission period of the second message by two. The receiving UE may acquire mobility information of the transmitting UE at a specific periodic interval through the received first message and second message.

Alternatively, the predetermined offset time may be configured in further consideration of a delay difference between a time taken for the receiving UE to receive the first message and a time taken for the receiving UE to receive the second message. For example, the first UE may configure the offset time based on the delay difference and the transmission period of the second message such that both the first message and the second message are received at a predetermined period (that is, such that the first message, the second message, and the first message are sequentially received at a specific period).

Next, the first UE may change or adjust the transmission period of the second message based on a channel quality of the first link (S235). For example, when the channel quality of the first link is less than a specific reference quality, the first UE may decrease the transmission period of the second message in response to deterioration of the channel quality of the first link. In contrast, when the channel quality of the first link is equal to or higher than the specific reference quality, the first UE may transmit the second message at a transmission period identical to the transmission period of the first message. For example, the first UE may periodically transmit the second message at the transmission period identical to the transmission period of the first message, but may decrease the transmission period of the second message to half in response to deterioration of the channel quality of the first link (that is, even when the transmission period of the V2X message is increased, the receiving UE may acquire the mobility information of the transmitting UE in the same manner as before).

Alternatively, when the transmission period of the first message is increased due to the channel quality of the first link, the first UE may decrease the transmission period of the second message to compensate for a gap of the first message. For example, when a CBR measured for the first link is equal to or higher than a first threshold quality, the first UE may increase the transmission period of the first message based on a transmission parameter for V2X communication. In this case, since the number of times mobility information is provided through the first message may decrease due to an increase in the transmission period of the first message, the first UE may compensate for the gap of the first message by decreasing the transmission period of the second message. For example, the first UE may periodically transmit the second message at a transmission period identical to the transmission period of the first message, but when the transmission period of the first message increases due to the CBR measured for the first link being equal to or higher than the first threshold quality, the first UE may decrease the transmission period of the second message to half.

Alternatively, the first UE may change the transmission period of the second message in further consideration of a mobility change. For example, a generation period of the first message may be determined based on a mobility change of the first UE. When the mobility change is less than a predetermined threshold change, the generation period of the first message may increase. Thus, when the mobility change is less than the predetermined threshold change, the first UE may decrease the transmission period of the second message. For example, the first UE may decrease the transmission period of the second message to half. Alternatively, the first UE may further consider whether a collision with surrounding UEs or surrounding vehicles is predicted for a V2X service. The first UE may decrease the transmission period of the second message when the generation period of the first message increases due to the mobility change and when a collision with surrounding UEs or surrounding vehicles is predicted.

FIG. 24 is a diagram for explaining a method in which a second UE receives a V2X message and a V2N message.

Referring to FIG. 24, the second UE may periodically receive a first message including first mobility information from a first UE through a first link for direct communication between UEs (S241). In addition, the second UE may receive messages not only through the first link for direct communication, but also through a second link for long-range communication (a Uu interface) such as a cellular network. For example, the second UE may periodically receive a second message including second mobility information from the first UE through the second link for communication with a network (S243). The second message may be a message generated after a predetermined offset time from a reception time of the first message. A reception period of the second message may be changed according to a channel quality of the first link.

According to the present disclosure, a transmission period of a V2N message may be adjusted in consideration of a V2X channel state and a generation condition of a V2X message, thereby allowing a receiving UE to effectively fuse the V2N message and the V2X message. Alternatively, according to the present disclosure, when the number of times a V2X message is transmitted decreases due to a V2X channel state, a transmission period of a V2N message transmitted through another interface may be decreased, thereby sufficiently compensating for a transmission gap of the V2X message through the V2N message. Alternatively, according to the present disclosure, degradation in reception of a V2X message may be effectively compensated for through a decrease in a transmission period of a V2N message based on deterioration of a V2X channel state. Alternatively, according to the present disclosure, when a UE is capable of transmitting both a V2N message based on long-range communication and a V2X message based on short-range communication, a transmission period may be increased to a level relatively longer than that of a conventional UE that transmits only a V2X message based on short-range communication, thereby effectively reducing load on a V2X channel.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

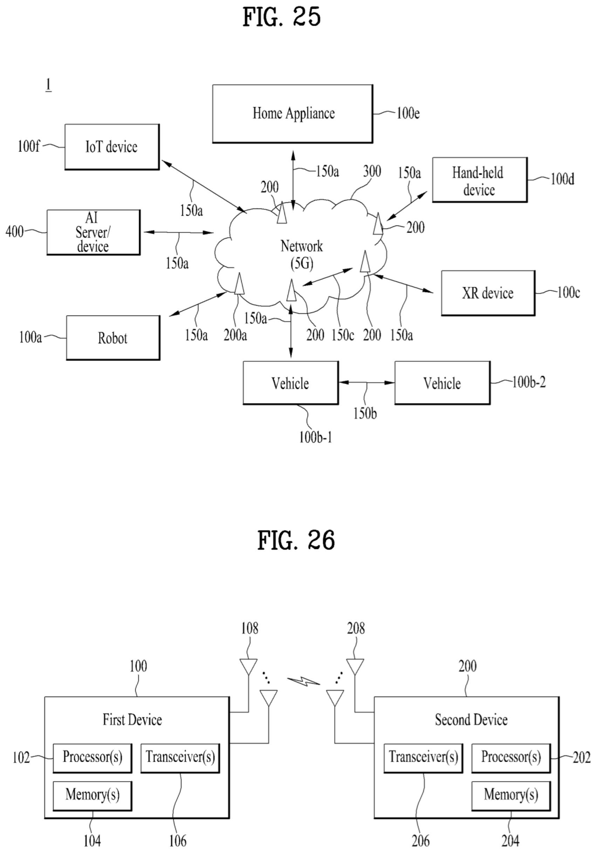

FIG. 25 illustrates a communication system applied to the present disclosure.

Referring to FIG. 25, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 26 illustrates a wireless device applicable to the present disclosure.

Referring to FIG. 26, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 25.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device 100 or a first UE may include the processor(s) 102 connected to the transceiver(s) 106 and the memory(s) 104. The memory(s) 104 may include at least one program capable of performing operations related to the embodiments described with reference to FIGS. 16 to 24.

The processor(s) 102 may control the transceiver(s) 106 to: periodically transmit a first message including first mobility information to a second UE through a first link for direct communication between UEs; and periodically receive a second message including second mobility information from the second UE through a second link for communication with a network. Here, the second message may be transmitted after an offset time from a transmission time of the first message, and a transmission period of the second message may be changed based on a channel quality of the first link.

Alternatively, there is provided a processing device configured to control a first UE including the processor(s) 102 and the memory(s) 104. The processing device includes: at least one processor; and at least one memory connected to the at least one processor and configured to store instructions that, based on execution by the at least one processor, cause the first UE to: periodically transmit a first message including first mobility information to a second UE through a first link for direct communication between UEs; and periodically receive a second message including second mobility information to the second UE through a second link for communication with a network. Here, the second message may be transmitted after an offset time from a transmission time of the first message, and a transmission period of the second message may be changed based on a channel quality of the first link.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Specifically, the second wireless device 200 or a second UE may include the processor(s) 202 connected to the transceiver(s) 206 and the memory(s) 204. The memory(s) 204 may include at least one program capable of performing operations related to the embodiments described with reference to FIGS. 16 to 24.

For example, the processor(s) 202 may control the transceiver(s) 206 to: periodically receive a first message including first mobility information from a first UE through a first link for direct communication between UEs; and periodically receive a second message including second mobility information from the first UE through a second link for communication with a network. Here, the second message may be a message generated after an offset time from a reception time of the first message, and a reception period of the second message may be changed based on a channel quality of the first link.

Alternatively, there is provided a processing device configured to control a second UE including the processor(s) 202 and the memory(s) 204. The processing device includes: at least one processor; and at least one memory connected to the at least one processor and configured to store instructions that, based on execution by the at least one processor, cause the second UE to: periodically receive a first message including first mobility information from a first UE through a first link for direct communication between UEs; and periodically receive a second message including second mobility information from the first UE through a second link for communication with a network. Here, the second message may be a message generated after an offset time from a reception time of the first message, and a reception period of the second message may be changed based on a channel quality of the first link.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

## Examples of wireless devices to which the present disclosure is applied

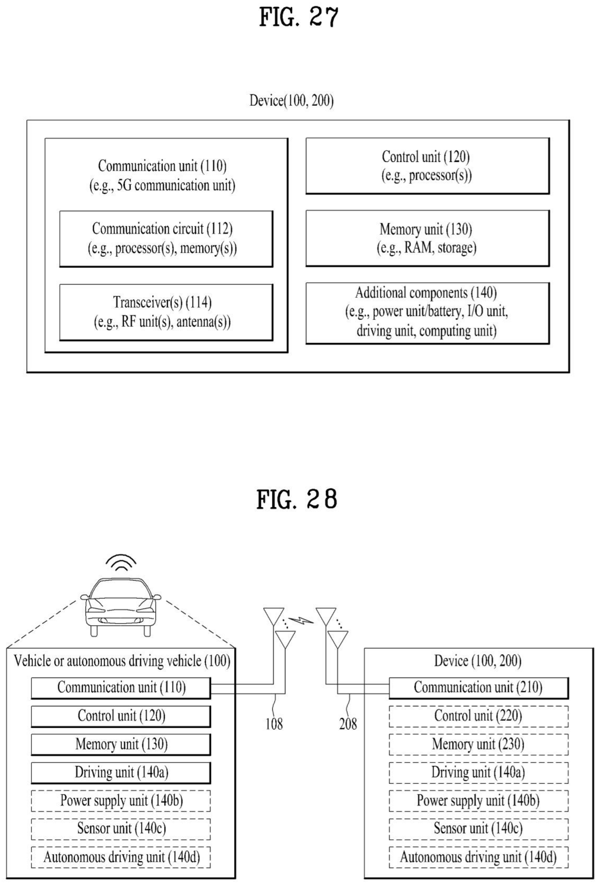

FIG. 27 illustrates another example of a wireless device applied to the present disclosure. The wireless device may be implemented in various forms according to a use-case/service (refer to FIG. 25)

Referring to FIG. 27, wireless devices 100 and 200 may correspond to the wireless devices 100 and 200 of FIG. 26 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 26. For example, the transceiver(s) 114 may include the one or more transceivers 106 and 206 and/or the one or more antennas 108 and 208 of FIG. 26. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast terminal, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 27, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Examples of vehicles or autonomous vehicles to which the present disclosure is applied

FIG. 28 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 28, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultra-acoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

**In** this document, embodiments of the present disclosure have been mainly described based on a signal transmission/reception relationship between a terminal and a base station. Such a transmission/reception relationship is

**EP 4 742 707 A1**

extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

**In** a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

**INDUSTRIAL APPLICABILITY**

The above-described embodiments of the present disclosure are applicable to various mobile communication systems.

**Claims**

1.   A method of transmitting a message by a first User Equipment (UE) in a wireless communication system, the method comprising:

   periodically transmitting a first message comprising first mobility information to a second UE through a first link for direct communication between UEs; and
   periodically transmitting a second message comprising second mobility information to the second UE through a second link for communication with a network,
   wherein the second message is generated and transmitted after an offset time from a transmission time of the first message, and
   wherein a transmission period of the second message is changed based on a channel quality of the first link.

2.   The method of claim 1, wherein the transmission period of the second message is decreased based on the channel quality of the first link being less than a first threshold quality.

3.   The method of claim 1, wherein the transmission period of the second message is decreased based on an increase in a transmission period of the first message due to the channel quality of the first link.

4.   The method of claim 1, wherein the first UE changes the transmission period of the second message in further consideration of at least one of mobility change and risk detection.

5.   The method of claim 1, wherein, based on a transmission period of the first message being identical to the transmission period of the second message, the offset time is set to a value obtained by dividing the transmission period of the second message by two.

6.   The method of claim 1, wherein the offset time is determined based on a difference between reception delay of the first message and reception delay of the second message and based on the transmission period of the second message.

7. The method of claim 1, wherein the channel quality of the first link is a Channel Busy Ratio (CBR).

8. The method of claim 1, wherein the first link is a link based on a PC5 interface, and
   wherein the second link is a link based on a Uu interface.

9. A computer-readable recording medium having recorded thereon a program for executing the method of claim 1.

10. A first User Equipment (UE) configured to transmit a message in a wireless communication system, the first UE comprising:

    a Radio Frequency (RF) transceiver; and
    a processor connected to the RF transceiver,
    wherein the processor is configured to control the RF transceiver to:

    periodically transmit a first message comprising first mobility information to a second UE through a first link for direct communication between UEs; and
    periodically receive a second message comprising second mobility information to the second UE through a second link for communication with a network,
    wherein the second message is generated and transmitted after an offset time from a transmission time of the first message, and
    wherein a transmission period of the second message is changed based on a channel quality of the first link.

11. A processing device configured to control a first User Equipment (UE) transmitting a message in a wireless communication system, the processing device comprising:

    at least one processor; and
    at least one memory connected to the at least one processor and configured to store instructions that, based on execution by the at least one processor, cause the first UE to:

    periodically transmit a first message comprising first mobility information to a second UE through a first link for direct communication between UEs; and
    periodically receive a second message comprising second mobility information to the second UE through a second link for communication with a network,
    wherein the second message is generated and transmitted after an offset time from a transmission time of the first message, and
    wherein a transmission period of the second message is changed based on a channel quality of the first link.

12. A method of receiving a message by a second User Equipment (UE) in a wireless communication system, the method comprising:

    periodically receiving a first message comprising first mobility information from a first UE through a first link for direct communication between UEs; and
    periodically receiving a second message comprising second mobility information from the first UE through a second link for communication with a network,
    wherein the second message is a message generated after an offset time from a reception time of the first message, and
    wherein a reception period of the second message is changed based on a channel quality of the first link.

13. A computer-readable recording medium having recorded thereon a program for executing the method of claim 12.

14. A second User Equipment (UE) configured to receive a message in a wireless communication system, the second UE comprising:

    a Radio Frequency (RF) transceiver; and
    a processor connected to the RF transceiver,
    wherein the processor is configured to control the RF transceiver to:

    periodically receive a first message comprising first mobility information from a first UE through a first link for direct communication between UEs; and

periodically receive a second message comprising second mobility information from the first UE through a second link for communication with a network,

wherein the second message is a message generated after an offset time from a reception time of the first message, and

wherein a reception period of the second message is changed based on a channel quality of the first link.

15. A processing device configured to control a second User Equipment (UE) receiving a message in a wireless communication system, the processing device comprising:

at least one processor; and

at least one memory connected to the at least one processor and configured to store instructions that, based on execution by the at least one processor, cause the second UE to:

periodically receive a first message comprising first mobility information from a first UE through a first link for direct communication between UEs; and

periodically receive a second message comprising second mobility information from the first UE through a second link for communication with a network,

wherein the second message is a message generated after an offset time from a reception time of the first message, and

wherein a reception period of the second message is changed based on a channel quality of the first link.

FIG. 1

# FIG. 2

# FIG. 3

EP 4 742 707 A1

# FIG. 4

# FIG. 5

FIG. 6

## FIG. 7

## FIG. 8

## FIG. 9

# FIG. 10

# FIG. 11

(a)

(b)

# FIG. 12

BS (e.g. eNB or gNB)

UE1        UE2

# FIG. 13

Frequency

| | |
|---|---|
| Unit #($N_F$ -1) | Unit #($2N_F$ -1) |

| | |
|---|---|
| Unit #($N_F*N_T$ -1) | Unit #($N_F$ -1) |

⋮        ⋮

| | |
|---|---|
| Unit #1 | Unit #($N_F$ +1) |

| | |
|---|---|
| Unit #($N_F*N_T-N_F$ +1) | Unit #1 |

. . .

| | |
|---|---|
| Unit #0 | Unit #$N_F$ |

| | |
|---|---|
| Unit #($N_F*N_T-N_F$) | Unit #0 |

Time

D2D signal transmission
from a UE allocated with unit #0

D2D signal transmission
from a UE allocated with unit #0

FIG. 14

PRB N3

$N^{size}_{BWP,\,2}$

PRB 1

PRB 0

PRB N2

$N^{size}_{BWP,\,1}$

PRB 1

PRB 0

Carrier
Bandwidth

$N^{start}_{BWP,\,2}$

PRB N1

$N^{size}_{BWP,\,0}$

$N^{start}_{BWP,\,1}$

PRB 1

PRB 0

$N^{start}_{BWP,\,0}$

Freq.

CRB 0

Time

PRB 0 (Point A) in the reference resource block

FIG. 15

(a)                                        (b)

## FIG. 16

## FIG. 17

EP 4 742 707 A1

# FIG. 18

## FIG. 19

(a)

(b)

EP 4 742 707 A1

# FIG. 20

(a)

(b)

# FIG. 21

(a)

(b)

EP 4 742 707 A1

## FIG. 22

V2X ratio1
(General Status)

V2X ratio2
( in case of small change )

Direct V2X message transmission

time

Collision prediction
in application

Collision prediction release
in application

Hybrid offset

V2N ratio 1

V2N ratio 2

V2N message transmission

time

EP 4 742 707 A1

## FIG. 23

**S231**

Transmitting a first message periodically to a second UE
via a first link for direct communication between UEs

**S233**

Transmitting a second message periodically to the second UE
via a second link for communication with a network

**S235**

Changing a transmission period of the second message
based on a channel quality of the first link

## FIG. 24

**S241**

Receiving the first message periodically from the first UE
via the first link for direct communication between UEs

**S243**

Receiving the second message periodically from the first UE
via the second link for communication with a network

# FIG. 25

# FIG. 26

# FIG. 27

Device(100, 200)

| Communication unit (110) (e.g., 5G communication unit) | Control unit (120) (e.g., processor(s)) |
|---|---|
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 28

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

# EP 4 742 707 A1

## INTERNATIONAL SEARCH REPORT

International application No.

**PCT/KR2024/009262**

### A. CLASSIFICATION OF SUBJECT MATTER

**H04W 4/40**(2018.01)i; **H04W 4/12**(2009.01)i; **H04W 24/08**(2009.01)i; **H04W 28/02**(2009.01)i; **H04W 92/18**(2009.01)i; **H04W 4/90**(2018.01)i; **H04W 56/00**(2009.01)i; **H04W 92/10**(2009.01)i

According to International Patent Classification (IPC) or to both national classification and IPC

### B. FIELDS SEARCHED

Minimum documentation searched (classification system followed by classification symbols)

H04W 4/40(2018.01); H04W 28/02(2009.01); H04W 4/23(2018.01); H04W 72/02(2009.01); H04W 76/14(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: V2X, PC5, Uu, 오프셋(offset), 품질(quality)

### C. DOCUMENTS CONSIDERED TO BE RELEVANT

| Category* | Citation of document, with indication, where appropriate, of the relevant passages | Relevant to claim No. |
|---|---|---|
| A | 3GPP; TSG SA; Architecture enhancements for V2X services (Release 17). 3GPP TS 23.285 V17.1.0 (June 2022). 15 June 2022.<br>See Annex C.3. | 1-15 |
| A | US 2020-0367030 A1 (LG ELECTRONICS INC.) 19 November 2020 (2020-11-19)<br>See paragraph [0172]; and claims 1-12. | 1-15 |
| A | US 2019-0182700 A1 (LG ELECTRONICS INC.) 13 June 2019 (2019-06-13)<br>See paragraphs [0062]-[0065]; and claims 1-17. | 1-15 |
| A | US 2023-0136170 A1 (VIVO MOBILE COMMUNICATION CO., LTD.) 04 May 2023 (2023-05-04)<br>See paragraphs [0140]-[0219]; and claims 1-20. | 1-15 |
| A | ZTE. Hybrid deployment option for V2X using PC5 based and LTE-Uu based architectures. S2-163498, 3GPP TSG SA WG2 Meeting #116. 04 July 2016.<br>See Annex C.2. | 1-15 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 October 2024** | **16 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2024/009262** |

| Patent document cited in search report | | | Publication date (day/month/year) | Patent family member(s) | | | Publication date (day/month/year) |
|---|---|---|---|---|---|---|---|
| US | 2020-0367030 | A1 | 19 November 2020 | EP | 3726861 | A1 | 21 October 2020 |
| | | | | EP | 3726861 | A4 | 26 May 2021 |
| | | | | EP | 3726861 | B1 | 14 June 2023 |
| | | | | US | 11317259 | B2 | 26 April 2022 |
| | | | | WO | 2019-117369 | A1 | 20 June 2019 |
| US | 2019-0182700 | A1 | 13 June 2019 | US | 11019520 | B2 | 25 May 2021 |
| | | | | WO | 2018-230866 | A1 | 20 December 2018 |
| US | 2023-0136170 | A1 | 04 May 2023 | CN | 111569879 | A | 25 August 2020 |
| | | | | CN | 111569879 | B | 17 January 2023 |
| | | | | CN | 111885255 | A | 03 November 2020 |
| | | | | CN | 113545110 | A | 22 October 2021 |
| | | | | CN | 113545110 | B | 11 November 2022 |
| | | | | CN | 113741127 | A | 03 December 2021 |
| | | | | CN | 113745439 | A | 03 December 2021 |
| | | | | CN | 113745439 | B | 18 April 2023 |
| | | | | CN | 113747359 | A | 03 December 2021 |
| | | | | CN | 113747359 | B | 18 July 2023 |
| | | | | CN | 113873378 | A | 31 December 2021 |
| | | | | CN | 113873378 | B | 10 March 2023 |
| | | | | CN | 113873465 | A | 31 December 2021 |
| | | | | CN | 212395198 | U | 26 January 2021 |
| | | | | EP | 3934265 | A1 | 05 January 2022 |
| | | | | EP | 4149168 | A1 | 15 March 2023 |
| | | | | EP | 4167590 | A1 | 19 April 2023 |
| | | | | EP | 4175384 | A1 | 03 May 2023 |
| | | | | JP | 2023-532078 | A | 26 July 2023 |
| | | | | JP | 2023-532743 | A | 31 July 2023 |
| | | | | KR | 10-2023-0029965 | A | 03 March 2023 |
| | | | | US | 11545598 | B2 | 03 January 2023 |
| | | | | US | 11623210 | B2 | 11 April 2023 |
| | | | | US | 11669297 | B2 | 06 June 2023 |
| | | | | US | 11956761 | B2 | 09 April 2024 |
| | | | | US | 2021-0376198 | A1 | 02 December 2021 |
| | | | | US | 2021-0405952 | A1 | 30 December 2021 |
| | | | | US | 2021-0405961 | A1 | 30 December 2021 |
| | | | | US | 2021-0410116 | A1 | 30 December 2021 |
| | | | | US | 2022-0251446 | A1 | 11 August 2022 |
| | | | | US | 2022-0305475 | A1 | 29 September 2022 |
| | | | | US | 2023-0134787 | A1 | 04 May 2023 |
| | | | | US | 2023-0180111 | A1 | 08 June 2023 |
| | | | | WO | 2021-238083 | A1 | 02 December 2021 |
| | | | | WO | 2021-238345 | A1 | 02 December 2021 |
| | | | | WO | 2021-238381 | A1 | 02 December 2021 |
| | | | | WO | 2021-238414 | A1 | 02 December 2021 |
| | | | | WO | 2021-238415 | A1 | 02 December 2021 |
| | | | | WO | 2021-238419 | A1 | 02 December 2021 |
| | | | | WO | 2021-238487 | A1 | 02 December 2021 |
| | | | | WO | 2022-001337 | A1 | 06 January 2022 |
| | | | | WO | 2022-001849 | A1 | 06 January 2022 |
| | | | | WO | 2022-001850 | A1 | 06 January 2022 |

Form PCT/ISA/210 (patent family annex) (July 2022)

## INTERNATIONAL SEARCH REPORT
**Information on patent family members**

International application No.

**PCT/KR2024/009262**

| Patent document cited in search report | Publication date (day/month/year) | Patent family member(s) | Publication date (day/month/year) |
|---|---|---|---|
| | | WO 2022-002166 A1 | 06 January 2022 |

Form PCT/ISA/210 (patent family annex) (July 2022)